# EUROPÄISCHE PATENTSCHRIFT

(11) **EP 0 556 590 B1**
(45) Veröffentlichungstag und Bekanntmachung des Hinweises auf die Patenterteilung: **26.03.1997**
(21) Anmeldenummer: 93100986.4
(22) Anmeldetag: 22.01.1993
(51) Int. Cl.: B23P 15/00, G01B 5/20, B23C 3/35, E05B 19/00

(54) **Verfahren und Vorrichtung zur Ermittlung der Kennung eines Schlüsselrohlinges**
Method and device for determining the identification of a key blank
Procédé et dispositif pour la détermination de l'identité d'une clé-ébauche

(30) Priorität: 15.02.1992 DE 4204534
(43) Veröffentlichungstag der Anmeldung: 25.08.1993
(73) Patentinhaber: Bosch, Karl-Heinz, 88630 Pfullendorf (DE)
(72) Erfinder: Bosch, Karl-Heinz, 88630 Pfullendorf (DE)
(74) Vertreter: Engelhardt, Guido, Dipl.-Ing.

(56) Entgegenhaltungen:
- EP-A- 0 053 730
- EP-A- 0 362 007
- WO-A-89/12867
- CH-A- 673 612
- DE-A- 2 545 621
- FR-A- 1 370 907
- FR-A- 2 489 535
- US-A- 4 012 991
- US-A- 4 143 582

## Beschreibung

Die Erfindung bezieht sich auf ein Verfahren zur Ermittlung der Kennung eines Schlüsselrohlinges, durch das das Oberflächenprofil eines eingespannten Schlüssels auf einer oder beiden Seiten , senkrecht zu dessen Längsachse, sowie die Profilgestaltung der Spitze des Schlüssels mittels Tastglieder abgetastet werden, sowie eine Vorrichtung zur Durchführung dieses Verfahrens.

Durch die EP 0 053 730 A1 ist eine Vorrichtung bekannt, bei der zur Ermittlung des Schlüsselrohlinges das Profil des eingeführten Schlüssels mittels Lichtwellen auf eine Fläche projiziert wird, so daß der eingeführte Schlüssel vermessen werden kann. In einem Bereichsadressen-Speicher werden die derart gewonnenen Daten mit den gespeicherten Daten der vorhandenen Schlüsselrohlinge verglichen und einem bestimmten zu dem eingeführten Schlüssel passenden Rohling zugeordnet.

Für in Längsachsrichtung verbogene Schlüssel ist diese Vorrichtung jedoch nicht einsetzbar, da durch die gebogene Form des Schlüssels erhebliche Meßabweichungen entstehen, die dazu führen, daß ein falscher nicht brauchbarer Schlüsselrohling ausgewählt wird. Und da durch die ständige Benutzung der Schlüssel diese aufgrund des durch den Schließvorganges entstehenden Drehmomentes in den meisten Fällen verbogen sind, ist der Einsatzbereich der bekannten Vorrichtung sehr begrenzt.

Des weiteren ist durch die verchromte Oberfläche des Schlüssel die Präzision der Projektion erheblich beeinträchtigt, da der Lichtstrahl durch die verchromte Oberfläche abgelenkt wird und aufgrund der derart entstandenen Streuung ebenfalls die Meßwerte verfälscht sind. Dies beeinträchtigt ebenfalls die Auswahl eines richtigen Schlüsselrohlinges erheblich.

Aufgabe der Erfindung ist es daher, ein Verfahren sowie eine Vorrichtung zu schaffen, mittels denen es möglich ist, bei der Anfertigung von zusätzlichen Schlüsseln in sehr kurzer Zeit und äußerst zuverlässig die Kennung des jeweiligen erforderlichen Schlüsselrohlinges zu ermitteln, so daß sichergestellt ist, daß ein dem vorgegebenen Schlüssel exakt entsprechender Nachschlüssel hergestellt werden kann. Der für die Vorrichtung erforderliche Bauaufwand soll gering gehalten werden auch soll diese leicht zu bedienen sein, so daß zur Ermittlung der Kennung eines erforderlichen Schlüsselrohlinges kein Fachpersonal notwendig ist, aber dennoch die Ausschußquote sehr gering gehalten werden kann. Die Anfertigung von Nachschlüsseln soll demnach erleichtert und der dazu erforderliche Kostenaufwand soll somit reduziert werden.

Diese Aufgabe wird mit den Merkmalen der Ansprüche 1 und 5 gelöst.

Die Spanneinrichtung kann hierbei in einfacher Ausgestaltung aus einer ortsfest angeordneten Anlageplatte und einer vorzugsweise in einem Endbereich mittels eines Gelenkbolzens verschwenkbar gelagerten Spannplatte gebildet sein, zwischen denen der Schlüssel durch ein auf die Spannplatte mittelbar oder unmittelbar einwirkendes Druckglied gehalten ist, wobei die Spannplatte in dem dem Gelenkbolzen gegenüberliegenden Endbereich mit einem im Querschnitt vorzugsweise dreieckförmig gestalteten Vorsprung versehen sein kann, der in die Längsnut des eingespannten Schlüssels eingreift, und als Druckglied eine oder mehrere Druckfedern vorgesehen werden können, die an einem an der Spannplatte angelenkten Verstellbolzen oder Verstellhebel sowie an der Anlageplatte abgestützt sind.

Ferner ist es zweckmäßig, die Spanneinrichtung mit einem mit dem Anschlag des Schlüssels zusammenwirkenden verstellbaren Gegenanschlag auszustatten, der durch eine entgegen der Kraft einer Rückstellfeder in Richtung des eingespannten Schlüssels verstellbare Anschlagplatte gebildet sein kann, die an der Anlageplatte geführt ist und eine dem Anschlag des Schlüssels zugeordnete Anschlagfläche aufweist.

Die Einrichtung zur Aufnahme einer oder beider Oberflächenprofile des eingespannten Schlüssels kann in einfacher Ausgestaltung durch einen oder mehrere Taststifte gebildet sein, die in einem vorzugsweise parallel zu dem Schlüssel verstellbar geführten Schlitten gehalten und beispielsweise durch die Kraft einer Feder an die Oberfläche des Schlüssels anlegbar sind, wobei die Taststifte jeweils mit einem Schrittmotor oder einem Potentiometer verbunden sind, durch die in vorgegebenen Betriebsstellungen die Verstellbewegungen der Taststifte in Richtung des Schlüssels erfaßbar und der Recheneinheit zuführbar sind.

In nahezu gleicher Weise kann die Einrichtung zur Messung der Länge des eingespannten Schlüssels und/oder zur Aufnahme der Profilgestaltung der Spitze des Schlüssels durch einen oder mehrere Taststifte gebildet sein, die in einem senkrecht zur Längsachse des Schlüssels verstellbar geführten Schlitten gehalten und beispielsweise durch die Kraft einer Feder an der Spitze des Schlüssels anlegbar sind, und wobei die Taststifte jeweils mit einem Schrittmotor oder einem Potentiometer verbunden sind, durch die in vorzugsweise vorgegebenen Betriebsstellungen die Verstellbewegungen der Taststifte in Richtung der Spitze des Schlüssels erfaßbar und der Recheneinheit zuführbar sind.

Zur Verstellung der Schlitten kann jeweils ein entgegen der Kraft einer Rückstellfeder auf diese einwirkender Schrittmotor vorgesehen werden, und die Taststifte und/oder die Schlitten können über einen Seilzug mit den Schrittmotoren bzw. den Potentiometern trieblich verbunden sein.

Ferner ist es angebracht, den Schlitten jeweils einen verstellbaren Anschlag zur Einjustierung ihrer Ausgangsstellung zuzuordnen.

Um eine fehlerhafte Abtastung an der Spitze eines mitunter abgewinkelt ausgebildeten Schlüssels auszuschließen, sollten die an der Spitze des eingespannten Schlüssels anlegbaren Taststifte mit einer planen beispielsweise durch einen an diesen angeformten Bund gebildeten Anlagefläche versehen sein.

Die Recheneinheit sollte mit einer Anzeige und/oder einer Druckeinheit zur Darstellung der ermittelten Kennung des dem eingespannten Schlüssel entsprechenden Schlüsselrohlinges versehen sein, damit die Kennung sofort zugänglich ist.

Mittels des erfindungsgemäßen Verfahrens bzw. der erfindungsgemäßen Vorrichtung ist es auf äußerst einfache Weise in sehr kurzer Zeit möglich, die Kennung eines Rohlinges zuverlässig zu ermitteln, der zur Anfertigung eines Nachschlüssels erforderlich ist. Wird nämlich ein eingespannter Schlüssel in entsprechender Weise abgetastet, so kann durch einen Vergleich mit gespeicherten Daten die jeweilige Kennung leicht aufgefunden werden. Erfahrungswissen und/oder Fachpersonal ist dazu nicht erforderlich, vielmehr ist lediglich der Schlüssel, zu dem ein Nachschlüssel anzufertigen ist, in die Vorrichtung einzuspannen und diese ist in Betrieb zu nehmen. Und da mit Hilfe der Spannvorrichtung der Schlüssel ohne Schwierigkeiten lageorientiert gehalten ist, sind Fehlmessungen nahezu ausgeschlossen.

Bei der Anfertigung von Nachschlüsseln ist somit gewährleistet, daß für diese jeweils der entsprechende Schlüsserohling zur Verfügung steht und daß die Ausschußquote äußerst gering gehalten werden kann. Des weiteren sind eine kostengünstige nicht durch Nebenzeiten belastete Schlüsselanfertigung sowie eine exakte Betätigung eines Schließzylinders mit Hilfe eines passenden Schlüssels sichergestellt. Des weiteren ist die Vorrichtung leicht zu handhaben, die Erstellung von Nachschlüsseln wird somit in einem erheblichen Maße erleichtert.

Auch durch die Benutzung in Schlüssellängsrichtung verbogene Schlüssel werden mittels der Taststifte präzise abgetastet.

Die verchromte Oberfläche der Schlüssel beeinträchtigt die genaue Funktionsweise der Taststifte bei der Abtastung ebenfalls nicht.

Aus diesen Gründen liefert die mechanische Abtastung von Schlüsseln keine ungenauen oder gar falschen Meßergebnissse, so daß gewährleistet ist, daß zu dem eingeführten Schlüssel der dazu korrespondierende Schlüsselrohling zuverlässig ausgewählt werden kann.

In der Zeichnung ist ein Ausführungsbeispiel der Vorrichtung zur Ermittlung der Kennung eines Schlüsselrohlinges dargestellt, das nachfolgend im einzelnen dargestellt ist. Hierbei zeigt:
- Figur 1: die aus einer Spann- und Abfrageeinrichtung und einer Recheneinheit bestehende Vorrichtung, in Draufsicht,
- Figur 2: die Spann- und Abfrageeinrichtung nach Figur 1 in einer vergrößerten Darstellung und in einer unterschiedlichen Betriebsstellung,
- Figur 3: die Spann- und Abfrageeinrichtung nach Figur 1 in Vorderansicht und in einer vergrößerten Darstellung,
- Figur 4: die Spann- und Abfrageeinrichtung nach Figur 3 in einer andersartigen Betriebsstellung sowie

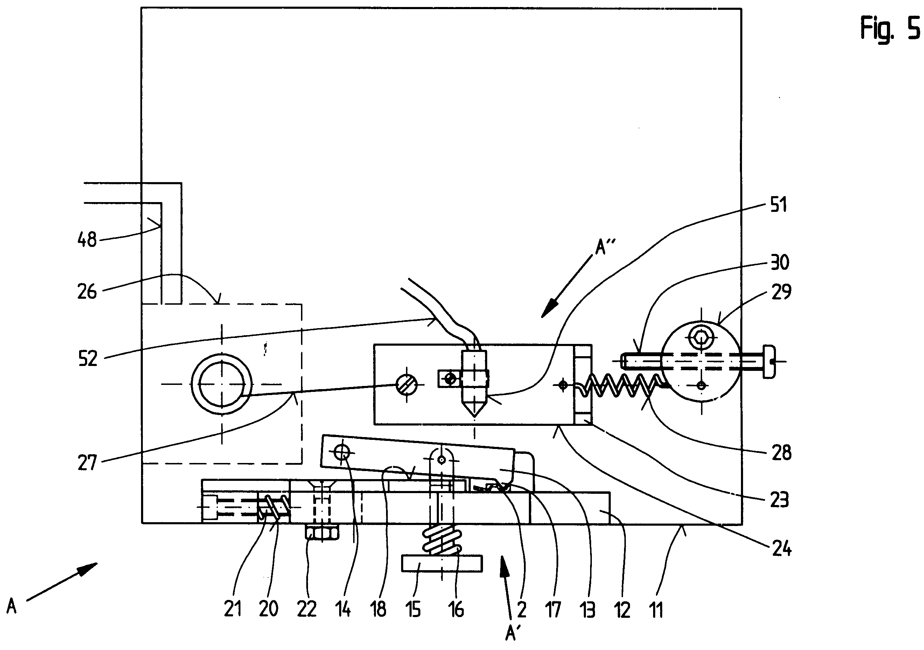

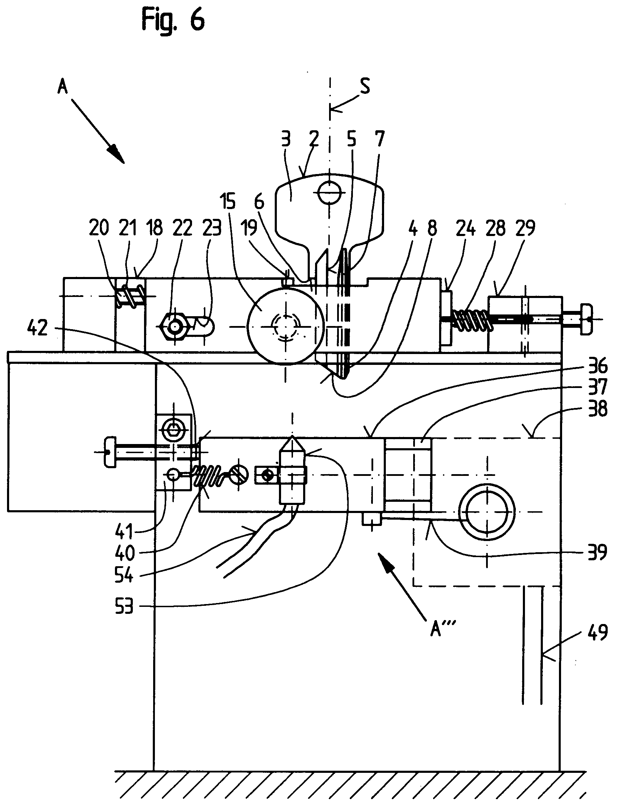

- Figuren 5 und 6: die Spann- und Abfrageeinrichtung nach den Figuren 2 und 3 mit als Signalgeber ausgebildeten Tastgliedern.

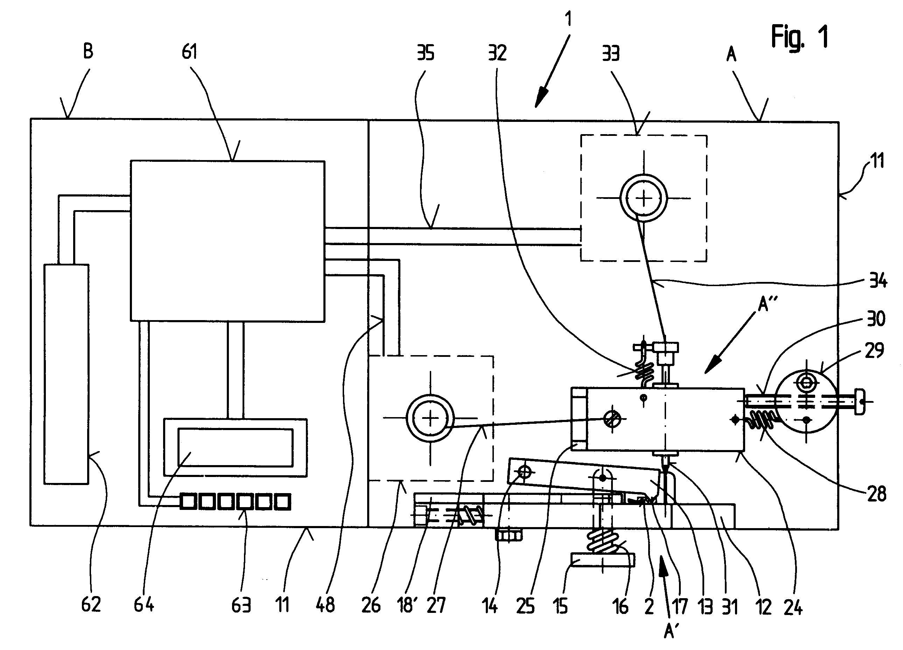

Die in Figur 1 dargestellte und mit 1 bezeichnete Vorrichtung dient der Ermittlung der Kennung eines in diese einspannbaren Schlüssels 2, damit gewährleistet ist, daß bei der Anfertigung eines oder mehrerer Nachschlüssel jeweils der dem eingespannten Schlüssel 2 entsprechende Schlüsselrohling zur Verfügung steht. Die Vorrichtung 1 ist im wesentlichen aus einer Spann- und Abfrageeinrichtung A und einer mit dieser zusammenwirkenden Recheneinheit B zusammengesetzt, in der die in der Spann- und Abfrageeinrichtung A ermittelten Daten mit gespeicherten Daten bekannter Schlüsselrohlinge verglichen werden, um auf diese Weise die Kennung des dem eingespannten Schlüssels 2 entsprechenden Schlüsselrohlings zu bestimmen.

Die Spann- und Abfrageeinrichtung A besteht hierbei aus der eigentlichen Spanneinrishtung A' zur Aufnahme des Schlüssels 2 sowie einer Einrichtung A'' zur Aufnahme des Oberflächenprofils 7 im Bereich des Bartes 4 des Schlüssels 2 und einer Einrichtung A''' zur Bestimmung der Länge des Bartes 4 sowie zur Aufnahme der Profilgestaltung der Spitze 8 des Schlüssels 2. Die jeweiligen Daten werden mit Hilfe von Schrittmotoren 33 und 45 ermittelt und über Signalleitungen 35 bzw. 47 einem in der Recheneinheit B eingebauten Rechner 61 zugeführt, der an eine Stromquelle 62 angeschlossen und mit Einschalttasten 63 versehen ist. Die durch Vergleich ermittelte Kennung des zu dem eingespannten Schlüssel 2 gehörenden Schlüsselrohlings ist auf dem Anzeigefeld 64 ablesbar.

In der Spanneinrichtung A' ist der Schlüssel 2, dessen Rohlingskennung festzustellen ist, lageorientiert einzuspannen. Dies wird mit Hilfe einer an einem Gehäuse 11 ortsfest angebrachten Anlageplatte 12 sowie einer Spannplatte 13 bewerkstelligt, die verschwenkbar gehalten ist. Die Spannplatte 13 ist dazu an einem Ende auf einem Bolzen 14 verschwenkbar gehalten und am anderen Ende mit einem im Querschnitt etwa dreieckförmig gestalteten Vorsprung 17 ausgestattet, der in eine üblicherweise in dem Bart 4 des Schlüssels 2 eingearbeitete Längsnut 5 eingreifen kann, außerdem wirkt auf die Spannplatte 13 die Kraft einer auf einem an dieser angelenkten Bolzen 15 angeordneten Feder 16 ein.

Der Schlüssel 2 ist somit mit Hilfe des angeformten Griffstückes 3 bei geöffneter Spanneinrichtung A' derart zwischen die Anlageplatte 12 und die Spannplatte 13 einzusetzen, daß der Vorsprung 17 der Spannplatte 13 in die Längsnut 5 einrasten kann. Dies erfolgt in der Weise, daß auf den Bolzen 15 eine Kraft ausgeübt wird, so daß die Kraft der sich an der Anlageplatte 12 abstützenden Fader 16 überwunden und die Spannplatte 13 um den Bolzen 14 geschwenkt wird.

Um den eingespannten Schlüssel 2 in seiner Höhenlage exakt ausrichten zu können, ist die Spanneinrichtung A' des weiteren mit einem verstellbaren Anschlag 18 ausgestattet. Der Anschlag 18 besteht hierbei aus einer entgegen der Kraft einer auf einem Bolzen 21 geführten Feder 20 in Richtung des Schlüssels 2 verschiebbaren Anschlagplatte 18', die eine dem Anschlag 6 des Schlüssels 2 zugeordnete Anschlagfläche 19 aufweist. Mittels einer in ein in der Anlageplatte 13 eingearbeitetes Langloch 23 eingreifenden Schraube 22 ist die Anschlagplatte 18' verschiebbar gehalten.

Wird die Anschlagplatte 18 in Richtung des Schlüssels 2 verschoben und wird dieser sodann nach unten gedrückt, so ist bei einer Anlage des Anschlages 6 an der Anschlagfläche 19 der Schlüssel 2 exakt ausgerichtet. Jeder in dieser Weise in der Spannvorrichtung A' eingespannte Schlüssel ist demnach lageorientiert gehalten.

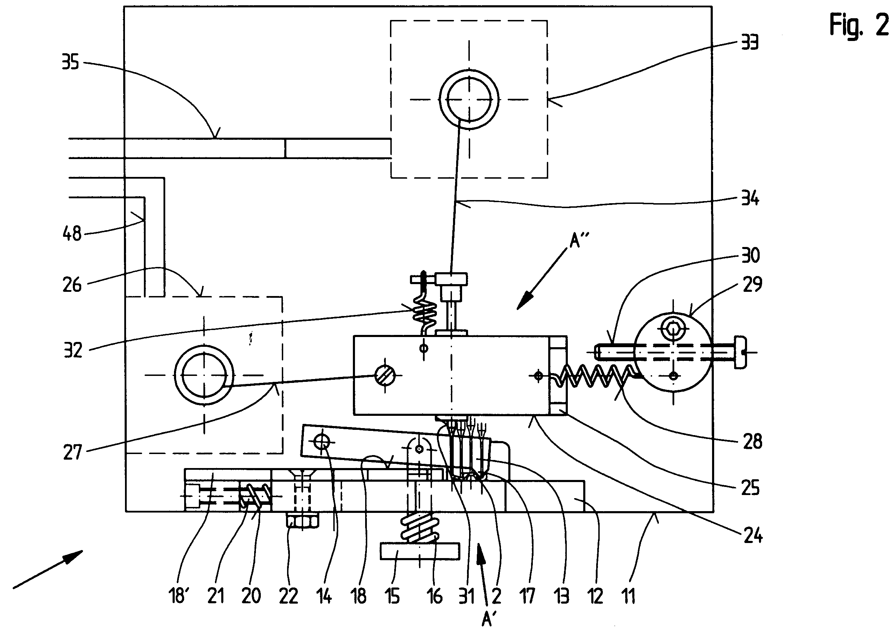

Mit Hilfe der Einrichtung A'' kann nunmehr, wie dies in Figur 2 dargestellt ist, das Oberflächenprofil 7 des Schlüssels 2 im Bereich des Bartes 4 aufgenommen werden. Dies wird in der Weise bewerkstelligt, daß mit Hilfe eines senkrecht zur Längsachse S des Schlüssels 2 verstellbaren Schlittens 24 ein Taststift 31 in unterschiedlichen Betriebsstellungen an das Oberflächenprofil 7 angelegt und der jeweilige Verstellweg mittels des Schrittmotors 33 ermittelt wird. Der in einer Führung 25 verschiebbar geführte Schlitten 24 ist dazu über einen Seilzug 27 mit einem Schrittmotor 26 verbunden, durch den der Schlitten 24, wie dies in Figur 2 strichpuntiert eingezeichnet ist, schrittweise verstellt wird. Der Schrittmotor 26 ist über eine Steuerleitung 48 ebenfalls an dem Rechner 61 der Recheneinheit B angeschlossen, so daß die jeweilige Lage des Taststiftes 31 eingestellt und bei der Auswertung berücksichtigt werden kann. Durch eine Rückstellfeder 28 wird der Schlitten 24 nach Beendigung der Aufnahme der Profiloberfläche 7 in die Ausgangslage zurückgefahren, und zwar gegen einen in einen Halter 29 eingespannten Anschlag 30. Da der als Schraube ausgebildete Anschlag 30 verstellbar ist, kann somit die Ausgangslage des Schlittens 24 leicht einjustiert werden.

Bei den Verstellbewegungen des Schlittens 24 wird der Tastfinger 31 entgegen der Kraft einer auf diesen einwirkenden Feder 32 jeweils in eine definierte Ausgangslage zurückgezogen. Dies wird mit Hilfe des Schrittmotors 33 bewerkstelligt, der über einen Seilzug 34 mit dem Tastfinger 31 verbunden ist. In den einzelnen strichpunktiert eingezeichneten Betriebsstellungen des Schlittens 24 wird der Tastfinger 31 jedoch durch die Kraft der Feder 32 an das Oberflächenprofil 7 des Schlittens 2 angelegt und die dabei zurückgelegte Wegstrecke wird mit Hilfe des Schrittmotors 33 ermittelt und über die Signalleitung 35 in den Rechner 61 eingegeben, so daß, je nach Anzahl der Meßpunkte, mitunter ein sehr exakter Verlauf des Oberflächenprofils 7 des eingespannten Schlüssels 2 aufzunehmen ist.

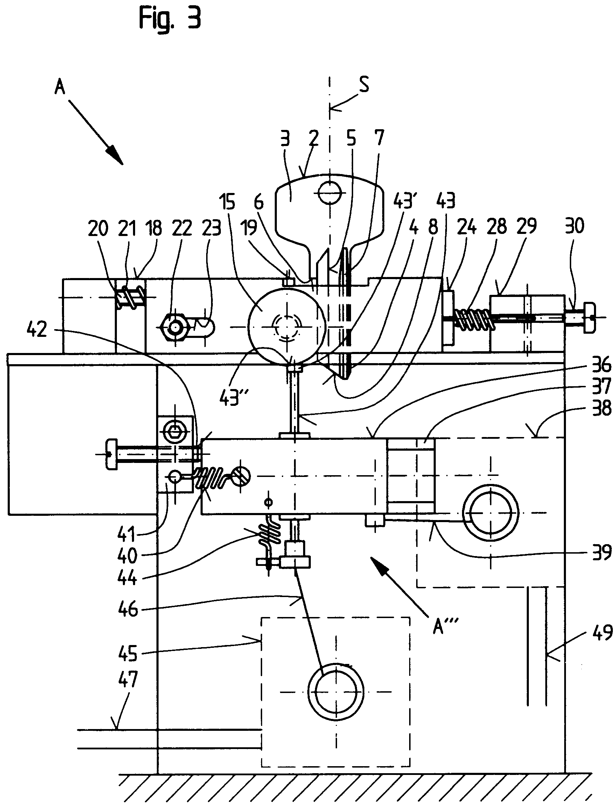

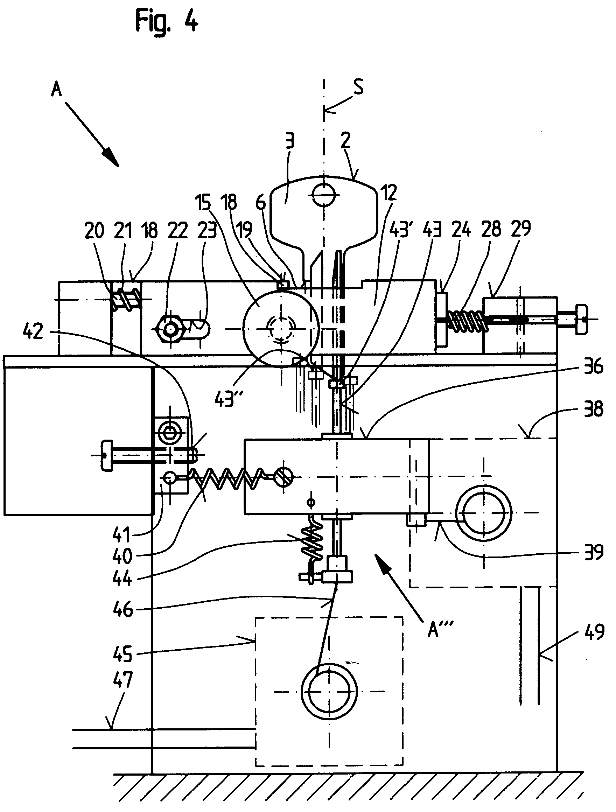

In nahezu gleicher Weise wird, wie dies in den Figuren 3 und 4 dargestellt ist, mit Hilfe der Einrichtung A''' die Länge des Bartes 4 des Schlüssels 2 gemessen sowie die Profilgestaltung der Spitze 8 aufgenommen. Dazu dient ebenfalls ein in einem Schlitten 36 angeordneter Tastfinger 43, der über einen Seilzug 46 mit dem Schrittmotor 45 verbunden ist. Zum schrittweisen Verstellen des in einer Führung 37 verschiebbaren Schlittens 36 ist ebenfalls ein Schrittmotor 38 vorgesehen, der über einen Seilzug 39 mit dem entgegen der Kraft einer Feder 40 verschiebbaren Schlitten 36 in Triebverbindung steht und über eine Steuerleitung 49 an den Rechner 61 der Recheneinheit B angeschlossen ist. Mit Hilfe eines in einem Halter 41 eingesetzten Anschlages 42 ist auch die Ausgangslage des Schlittens 36 einjustierbar.

Bei den Verstellbewegungen des Schlittens 36 wird der Tastfinger 43 durch den Schrittmotor 45 entgegen der Kraft einer Feder 44 in eine definierte Ausgangslage zurückgezogen und bei Stillstand des Schlittens 36 durch die Kraft der Feder 44 an der Spitze 8 angelegt. Auf diese Weise ist es möglich, nicht nur die Länge des Bartes 4 des Schlüssels 2 zu messen, sondern es kann auch die Profilgestaltung der Spitze 8 aufgenommen werden. Damit dabei der Tastfinger 43 nicht mitunter in die Nut 5 des Schlüssels 2 eintaucht, weist der Tastfinger 43 eine durch einen Bund 43' geschaffene plane Anlagefläche 43'' auf. Über die Steuerleitung 47 werden die auf diese Weise ermittelten Daten dem Rechner 61 der Recheneinheit B zugeführt, so daß in dieser die Länge des Schlüssels 2 und die Profilgestaltung der Spitze 8 bestimmt werden können. Durch einen Vergleich der von dem Schlüssel 2 abgenommenen Daten mit in dem Rechner 61 gespeicherten Daten kann somit in der Recheneinheit B ohne Schwierigkeiten die Kennung des dem Schlüssel 2 entsprechenden Schlüsselrohlings bestimmt und angezeigt werden.

## Patentansprüche

1. Verfahren zur Ermittlung der Kennung eines Schlüsselrohlings, durch das das Oberflächenprofil (7) eines lageorientiert eingespannten Schlüssels (2) auf einer oder beiden Seiten senkrecht zu dessen Längsachse (S) sowie die Profilgestaltung der Spitze (8) des Schlüssels (2) mittels Tastglieder (31; 43) abgetastet werden,
**dadurch gekennzeichnet,**
daß beim Auftreffen der mechanisch wirkenden Tastglieder (31; 43) auf den Schlüssel (2) deren Meßwerte mittels Abfrage der Schritte der zugeordneten Schrittmotore (33; 45) oder Abfrage der Stellung eines Potentiometers ermittelt werden, und daß die ermittelten Werte in einer Recheneinheit (B) mit gespeicherten Daten bekannter Schlüsselrohlinge verglichen werden, um den für die Fertigung eines Schlüsselduplikates benötigten Schlüsselrohling zu ermitteln.

2. Verfahren nach Anspruch 1,
**dadurch gekennzeichnet,**
daß das Oberflächenprofil (7) des eingespannten Schlüssels (2), dessen Länge und/oder dessen Profilgestaltung im Bereich der Spitze (8) mit Hilfe von Tastgliedern (Taststifte 31, 43) mechanisch ermittelt werden.

3. Verfahren nach Anspruch 1 oder 2,
**dadurch gekennzeichnet,**
daß der Schlüssel (2) bei der Datenermittlung mittels eines in dessen Längsnut (5) eingreifenden Spanngliedes (Spannplatte 13) lageorientiert gehalten wird.

4. Verfahren nach einem oder mehreren der Ansprüche 1 bis 3,
**dadurch gekennzeichnet,**
daß der Schlüssel (2) mit Hife eines mit dessen Anschlag (6) zusammenwirkenden, vorzugsweise verstellbaren Gegenanschlages (18) lageorientiert auf die Tastglieder (Taststifte 31; 43) ausgerichtet wird.

5. Vorrichtung zur Durchführung des Verfahrens nach Anspruch 1 und zur Ermittlung der Kennung eines Schlüsselrohlinges mit einer Spann- und Abfrageeinrichtung (A), in der ein Schlüssel (2), dessen zugehörige Rohlingskennung zu ermitteln ist, lageorientiert gehalten ist und die Einrichtungen (A'', A''') zur Aufnahme einer oder beider Oberflächenprofile (7) des eingespannten Schlüssels (2), senkrecht zu seiner Längsachse (S), zur Messung der Schlüssellänge und/oder zur Aufnahme der Profilgestaltung der Spitze (8) des eingespannten Schlüssels (2) aufweist,
**gekennzeichnet durch**
eine Recheneinheit (B), in der durch einen Vergleich der von dem eingespannten Schlüssel (2) mittels der Tastglieder (31; 43) mechanisch abgenommener Meßwerte, welche durch Abfrage der Schritte der zugeordneten Schrittmotore oder Abfrage der Stellung eines Potentiometers ermittelt werden, mit gespeicherten Daten bekannter Schlüsselrohlinge die Kennung des dem eingespannten Schlüssels (2) entsprechenden Schlüsselrohlings bestimmbar ist.

6. Vorrichtung nach Anspruch 5,
**dadurch gekennzeichnet,**
daß die Spanneinrichtung (A') aus einer ortsfest angeordneten Anlageplatte (12) und einer vorzugsweise in einem Endbereich mittels eines Gelenkbolzens (14) verschwenkbar gelagerten Spannplatte (13) gebildet ist, zwischen denen der Schlüssel (2) durch ein auf die Spannplatte (13) mittelbar oder unmittelbar einwirkendes Druckglied (Feder 16) gehalten ist.

7. Vorrichtung nach Anspruch 6,
**dadurch gekennzeichnet,**
daß die Spannplatte (13) in dem dem Gelenkbolzen (14) gegenüberliegenden Endbereich mit einem im Querschnitt vorzugsweise dreieckförmig gestalteten Vorsprung (17) versehen ist, der in die Längsnut (5) des eingespannten Schlüssels (2) eingreift.

8. Vorrichtung nach Anspruch 6 oder 7,
**dadurch gekennzeichnet,**
daß als auf die Spannplatte (13) einwirkendes Druckglied eine oder mehrere Druckfedern (16) vorgesehen sind, die an einem an der Spannplatte (13) angelenkten Verstellbolzen (15) oder Verstellhebel sowie an der Anlageplatte (12) abgestützt sind.

9. Vorrichtung nach einem oder mehreren der Ansprüche 6 bis 8,
**dadurch gekennzeichnet,**
daß die Spanneinrichtung (A') mit einem mit dem Anschlag (6) des Schlüssels (2) zusammenwirkenden verstellbaren Gegenanschlag (18) versehen ist.

10. Vorrichtung nach Anspruch 9,
**dadurch gekennzeichnet,**
daß der Gegenanschlag (18) der Spanneinrichtung (A') durch eine entgegen der Kraft einer Rückstellfeder (20) in Richtung des eingespannten Schlüssels (2) verstellbare Anschlagplatte (18') gebildet ist, die an der Anlageplatte (12) geführt ist und eine dem Anschlag (6) des Schlüssels (2) zugeordnete Anschlagfläche (19) aufweist.

11. Vorrichtung nach einem oder mehreren der Ansprüche 5 bis 10,
**dadurch gekennzeichnet,**
daß die Einrichtung (A'') zur Aufnahme einer oder beider Oberflächenprofile (7) des eingespannten Schlüssels (2) durch einen oder mehrere Taststifte (31) gebildet ist, die in einem vorzugsweise parallel zu dem Schlüssel (2) verstellbar geführten Schlitten (24) gehalten und beispielsweise durch die Kraft einer Feder (32) an das Oberflächenprofil (7) des Schlüssels (2) anlegbar sind, und daß die Taststifte (31) jeweils mit einem Schrittmotor (33) oder einem Potentiometer verbunden sind, durch die in vorgegebenen Betriebsstellungen die Verstellbewegungen der Taststifte (31) in Richtung des Schlüssels (2) erfaßbar und der Recheneinheit (B) zuführbar sind.

12. Vorrichtung nach einem oder mehreren der Ansprüche 5 bis 10,
**dadurch gekennzeichnet,**
daß die Einrichtung (A''') zur Messung der Länge des eingespannten Schlüssels (2) und/oder zur Aufnahme der Profilgestaltung der Spitze (8) des Schlüssels (2) durch einen oder mehrere Taststifte (43) gebildet ist, die in einem senkrecht zur Längsachse (S) des Schlüssels (2) verstellbar geführten Schlitten (36) gehalten und beispielsweise durch die Kraft einer Feder (44) an der Spitze (8) des Schlüssels (2) anlegbar sind, und daß die Taststifte (43) jeweils mit einem Schrittmotor (45) oder einem Potentiometer verbunden sind, durch die in vorzugsweise vorgegebenen Betriebsstellungen die Verstellbewegungen der Taststifte (43) in Richtung der Spitze (8) des Schlüssels (2) erfaßbar und der Recheneinheit (B) zuführbar sind.

13. Vorrichtung nach Anspruch 11 oder 12,
**dadurch gekennzeichnet,**
daß zur Verstellung der Schlitten (24; 36) jeweils ein entgegen der Kraft einer Rückstellfeder (28; 40) auf diese einwirkender Schrittmotor (26; 38) vorgesehen ist.

14. Vorrichtung nach einem oder mehreren der Ansprüche 11 bis 13,
**dadurch gekennzeichnet,**
daß die Taststifte (31; 43) und/oder die Schlitten (24; 36) jeweils über einen Seilzug (34; 46 bzw. 27; 39) mit den Schrittmotoren (33, 45 bzw. 26, 38) oder den Potentiometern trieblich verbunden sind.

15. Vorrichtung nach einem oder mehreren der Ansprüche 11 bis 14,
**dadurch gekennzeichnet,**
daß den Schlitten (24; 36) jeweils ein verstellbarer Anschlag (30; 42) zur Einjustierung ihrer Ausgangsstellung zugeordnet ist.

16. Vorrichtung nach Anspruch 15,
**dadurch gekennzeichnet,**
daß die an der Spitze (8) des eingespannten Schlüssels (2) anlegbaren Taststifte (43) jeweils mit einer planen beispielsweise durch einen an diesen angeformten Bund (43') gebildeten Anlagefläche versehen sind.

17. Vorrichtung nach einem oder mehreren der Ansprüche 5 bis 16,
**dadurch gekennzeichnet,**
daß die Recheneinheit (B) mit einer Anzeige (64) und/oder einer Druckeinheit zur Darstellung der ermittelten Kennung des dem eingespannten Schlüssel (2) ent- sprechenden Schlüsselrohlinges versehen ist.

## Claims

1. Method for determining the identification of a key blank by means of which the surface profile (7) of a key (2) clamped in an oriented position is traced off on one or both sides vertically to the longitudinal axis (S) of the key (2) by tracer elements (31; 43) which also trace off the profile configuration of the tip (8) of the key (2),
**characterised in that,**
when the mechanically acting tracer elements (31; 43) make contact with the key (2), their measurement values are determined by polling the number of steps of associated stepping motors (33; 45) or by polling the position of a potentiometer, and that a computation unit (B) compares the values determined with stored data on known key blanks in order to determine the key blank required for producing a duplicate key.

2. The method in accordance with Claim 1,
**characterised in that,**
the surface profile (7) of the clamped key (2), its length and/or profile configuration in the area of the tip (8) are determined mechanically by means of tracer elements (tracer fingers 31, 43).

3. The method in accordance with Claim 1 or 2,
**characterised in that,**
the key (2) is held in an oriented position during the data recording process by means of a clamping element (clamping plate 13) which engages in its longitudinal groove (5).

4. The method in accordance with one or more of Claims 1 to 3,
**characterised in that,**
the key (2) is aligned in an oriented position in relation to the tracer elements (tracer fingers 31; 43) by means of a counter-stop (18) which, in a preferred embodiment, can be adjusted and which acts in conjunction with the shoulder stop (6) on the key (2).

5. Device for implementing the method in accordance with Claim 1 and for determining the identification of a key blank with a clamping and polling device (A) in which a key (2), the identification of the blank corresponding to which is to be determined, is held in an oriented position and which possesses devices (A'', A''') for recording one or both surface profiles (7) of the clamped key (2) vertically in relation to its longitudinal axis (S), for measuring the length of the key (2) and/or recording the profile configuration of the tip (8) of the clamped key (2),
**characterised in that,**
there is a computation unit (B) in which the identification of the key blank corresponding to the clamped key (2) can be determined by means of a comparison between stored data about known key blanks and the measurement values recorded mechanically from the clamped key (2) using tracer elements (31; 43) and determined by polling the number of steps of associated stepping motors or by polling the position of a potentiometer.

6. The device in accordance with Claim 5,
**characterised in that,**
the clamping device (A') is formed by a contact plate (12) in a fixed arrangement and a clamping plate (13) mounted on an articulated pin (14) which preferably allows the clamping plate (13) to swivel at one end, with the key (2) being held between these two plates by means of a thrust element (spring 16) acting either directly or indirectly upon the clamping plate (13).

7. The device in accordance with Claim 6,
**characterised in that,**
the clamping plate (13) is provided with a projection (17) in its end section opposite the articulated pin (14), the projection (17) preferably having a triangular cross-section and engaging in the longitudinal groove (5) of the clamped key (2).

8. The device in accordance with Claim 6 or 7,
**characterised in that,**
one or more compression springs (16) are provided as thrust elements acting on the clamping plate (13), with these springs being braced against an adjusting pin (15) or adjusting lever articulated on the clamping plate (13) as well as against the contact plate (12).

9. The device in accordance with one or more of Claims 6 to 8,
**characterised in that,**
the clamping device (A') is provided with an adjustable counter-stop (18) which acts in conjunction with the shoulder stop (6) on the key (2).

10. The device in accordance with Claim 9,
**characterised in that,**
the counter-stop (18) of the clamping device (A') is formed by a stop plate (18') which can be moved towards the clamped key (2) against the force of a return spring (20), with the stop plate (18') being guided on the contact plate (12) and having a stop surface (19) assigned to the shoulder stop (6) on the key (2).

11. The device in accordance with one or more of Claims 5 to 10,
**characterised in that,**
the device (A'') for recording one or both surface profiles (7) of the clamped key (2) is formed by one or more tracer fingers (31) held in a slide (24) which can preferably be adjusted in parallel to the key (2) and in a manner which enables the tracer fingers (31) to be brought into contact with the surface profile (7) of the key (2) using the force of a spring (32), for example, and that the tracer fingers (31) are each connected to a stepping motor (33) or a potentiometer by means of which the adjustment movements of the tracer fingers (31) towards the key (2) can be detected in specified operating positions and transmitted to the computation unit (B).

12. The device in accordance with one or more of Claims 5 to 10,
**characterised in that,**
the device (A''') for measuring the length of the clamped key (2) and/or for recording the profile configuration of the tip (8) of the key (2) is formed by one or more tracer fingers (43) held in a slide (36) which can be adjusted vertically in relation to the longitudinal axis (S) of the key (2) and in a manner which enables the tracer fingers (43) to be brought into contact with the tip (8) of the key (2) using the force of a spring (44), for example, and that the tracer fingers (43) are each connected to a stepping motor (45) or a potentiometer by means of which the adjustment movements of the tracer fingers (43) towards the tip (8) of the key (2) can be detected, preferably in specified operating positions, and transmitted to the computation unit (B).

13. The device in accordance with Claim 11 or 12,
**characterised in that,**
one stepping motor (26; 38) acting against the force of a return spring (28; 40) is provided for adjusting each slide (24; 36).

14. The device in accordance with one or more of Claims 11 to 13,
**characterised in that,**
the tracer fingers (31; 43) and/or the slides (24; 36) are each connected to and can be driven by the stepping motors (33, 45 or 26, 38) or the potentiometers by means of a cable control (34; 46 or 27; 39).

15. The device in accordance with one or more of Claims 11 to 14,
**characterised in that,**
an adjustable stop (30; 42) is assigned to each of the slides (24; 36) in order to set their starting position.

16. The device in accordance with Claim 15,
**characterised in that,**
the tracer fingers (43) which can be brought into contact with the tip (8) of the clamped key (2) are each provided with a flat contact surface formed, for example, by a collar (43') shaped onto them.

17. The device in accordance with one or more of Claims 5 to 16,
**characterised in that,**
the computation unit (B) is equipped with a display (64) and/or a printer unit for representing the identification which has been determined for the key blank corresponding to the clamped key (2).

## Revendications

1. Procédé pour la détermination de l'identité d'une clé-ébauche, par lequel sont palpés, au moyen d'éléments palpeurs (31; 43), sur un ou sur les deux côtés et perpendiculairement à son axe longitudinal (S), le profil de surface (7) d'une clé (2) positionnée, ainsi que le profil de la pointe (8) de la clé (2),
**caractérisé en ce que**,
au contact des éléments palpeurs à effet mécanique (31; 43) avec la clé (2), leurs valeurs de mesure sont relevées soit par interrogation des pas des moteurs pas à pas assignés, soit par interrogation de la position d'un potentiomètre, et que les valeurs relevées sont comparées dans une unité calculatrice (B) avec les caractéristiques mémorisées de clés-ébauches connues, afin de déterminer la clé-ébauche nécessaire à la reproduction d'une clé.

2. Procédé d'après la revendication 1,
**caractérisé en ce que**
le profil de surface (7) de la clé serrée (2), sa longueur et/ou son profit à l'endroit de la pointe (8) sont déterminés mécaniquement au moyen d'éléments palpeurs (palpeurs 31; 43).

3. Procédé d'après la revendication 1 ou 2,
**caractérisé en ce que**,
lors du relèvement des caractéristiques, la clé (2) est positionnée au moyen d'un élément de serrage (plaque de serrage 13) s'engrenant dans sa gorge longitudinale (5).

4. Procédé d'après une ou plusieurs des revendications 1 à 3,
**caractérisé en ce que**,
au moyen d'une contre-butée de préférence réglable (18) collaborant avec sa butée (6), la clé (2) est positionnée relativement aux éléments palpeurs (palpeurs 31; 43).

5. Dispositif pour l'exécution du procédé d'après la revendication 1 et pour la détermination de l'identité d'une clé-ébauche, avec un équipement de serrage et d'interrogation (A), dans lequel est positionnée une clé (2) dont l'identité d'ébauche correspondante doit être déterminée, et les équipements (A'', A''') pour déterminer l'un ou les deux profils de surface (7) de la clé serrée (2) perpendiculairement à son axe longitudinal (S), pour mesurer la longueur de la clé et/ou pour déterminer le profil de la pointe (8) de la clé (2),
**caractérisé par**
une unité calculatrice (B), dans laquelle l'identité de la clé-ébauche correspondant à la clé serrée (2) se laisse déterminer par comparaison des valeurs palpées mécaniquement sur la clé serrée (2) au moyen d'éléments palpeurs (31; 43) et qui sont relevées soit par interrogation des pas des moteurs pas à pas assignés, soit par interrogation de la position d'un potentiomètre, avec les caractéristiques mémorisées de clés-ébauches connues.

6. Dispositif d'après la revendication 5,
**caractérisé en ce que**
l'équipement de serrage (A') consiste d'une plaque d'appui (12) stationnaire et d'une plaque de serrage (13) logée pivotante, de préférence à une extrémité, au moyen d'un boulon à articulation (14), entre lesquelles la clé (2) est positionnée au moyen d'un organe de pression (ressort 16) agissant directement ou indirectement sur la plaque de serrage (13).

7. Dispositif d'après la revendication 6,
**caractérisé en ce que**,
à l'extrémité opposée au boulon à articulation (14), la plaque de serrage (13) est munie d'une saillie (17) dont la section est conçue de préférence sous forme triangulaire, et qui s'engrène dans la gorge longitudinale (5) de la clé serrée (2).

8. Dispositif d'après la revendication 6 ou 7,
**caractérisé en ce que**,
en tant qu'organe de pression agissant sur la plaque de serrage (13), il est prévu un ou plusieurs ressorts de pression (16) s'appuyant sur un boulon de réglage (15) ou un lever de réglage articulé sur la plaque de serrage (13) ainsi que sur la plaque d'appui (12).

9. Dispositif d'après une ou plusieurs des revendications 6 à 8,
**caractérisé en ce que**
l'équipement de serrage (A') est muni d'une contre-butée réglable (18) collaborant avec la butée (6) de la clé (2).

10. Dispositif d'après la revendication 9,
**caractérisé en ce que**
la contre-butée (18) de l'équipement de serrage (A') est formée par une plaque de butée (18') réglable contre la force d'un ressort de rappel (20) en direction de la clé serrée (2), la plaque de butée étant guidée sur la plaque d'appui (12) et comportant une face de butée (19) assignée à la butée (6) de la clé (2).

11. Dispositif d'après une ou plusieurs des revendications 5 à 10,
**caractérisé en ce que**
l'équipement (A'') est conçu pour déterminer l'un ou les deux des profils de surface (7) de la clé serrée (2) moyennant un ou plusieurs palpeurs (31) retenus dans un chariot réglable (24), guidé de préférence parallèlement à clé serrée (2), et qui sont forcés par exemple par un ressort (32) sur le profil de surface (7) de la clé (2), et que les palpeurs (31) sont liés respectivement à un moteur pas à pas (33) ou à un potentiomètre qui permettent dans des plages de service prédéterminées de saisir les mouvements de réglage des palpeurs (31) en direction de la clé (2) et de les transmettre à l'unité calculatrice (B).

12. Dispositif d'après une ou plusieurs des revendications 5 à 10,
**caractérisé en ce que**
l'équipement (A''') servant à la mesure de la longueur de la clé serrée (2) et/ou pour déterminer le profil de la pointe (8) de la clé (2) consiste d'un ou de plusieurs palpeurs (43) retenus dans un chariot réglable (36), guidé perpendiculairement à l'axe longitudinal (S) de la clé (2), et qui sont forcés par exemple par un ressort (44) sur la pointe (8) de la clé (2), et que les palpeurs (43) sont liés respectivement à un moteur pas à pas (45) ou à un potentiomètre qui permettent dans des plages de service prédéterminées de saisir les mouvements de réglage des palpeurs (43) en direction de la pointe (8) de la clé (2) et de les transmettre à l'unité calculatrice (B).

13. Dispositif d'après la revendication 11 ou 12,
**caractérisé en ce que**
pour le réglage des chariots (24; 35), il est prévu respectivement un moteur pas à pas (26; 38) qui les commande contre la force d'un ressort de rappel (28; 40).

14. Dispositif d'après une ou plusieurs des revendications 11 à 13,
**caractérisé en ce que**
les palpeurs (31; 43) et/ou les chariots (24; 36) sont liés entraînés, au moyen d'un câble de transmission (34; 46 ou 27; 39) aux moteurs pas à pas (33, 45 ou 26, 38).

15. Dispositif d'après une ou plusieurs des revendications 11 à 14,
**caractérisé en ce**,
aux chariots (24; 36), il est assigné respectivement une butée réglable (30; 42) pour ajuster leur position de départ.

16. Dispositif d'après la revendication 15,
**caractérisé en ce que**
les palpeurs (43) portant sur la pointe (8) de la clé serrée (2) sont munis respectivement d'une face de portée plane, constituée par exemple par un collet (43') qui est formé sur ceux-ci.

17. Dispositif d'après une ou plusieurs des revendications 5 à 16,
**caractérisé en ce que**
l'unité calculatrice (B) est équipée d'une visualisation (64) et/ou d'un indicateur de pression pour l'affichage de l'identité déterminée de la clé-ébauche correspondant à la clé serrée (2).
